# EUROPÄISCHE PATENTSCHRIFT

(11) **EP 3 596 907 B1**
(45) Veröffentlichungstag und Bekanntmachung des Hinweises auf die Patenterteilung: **07.04.2021**
(21) Anmeldenummer: 18705603.1
(22) Anmeldetag: 13.02.2018
(51) Int. Cl.: H04L 29/08, H04L 29/06

(54) **SYSTEM UND VERFAHREN ZUR SICHEREN FAHRZEUGKOMMUNIKATION**
SYSTEM AND METHOD FOR SECURE VEHICLE COMMUNICATION
SYSTÈME ET PROCÉDÉ DE COMMUNICATION DE VÉHICULE SÛRE

(30) Priorität: 14.03.2017 DE 102017204156
(43) Veröffentlichungstag der Anmeldung: 22.01.2020
(73) Patentinhaber: Bayerische Motoren Werke Aktiengesellschaft, 80809 München (DE)
(72) Erfinder: HÜBNER, Konrad, 82131 Gauting (DE); JURK, Reinhard, 82194 Groebenzell (DE)
(86) Internationale Anmeldenummer: PCT/EP2018/053566
(87) Internationale Veröffentlichungsnummer: WO 2018/166732

(56) Entgegenhaltungen:
- US-A1- 2004 117 195
- US-A1- 2016 352 712

## Beschreibung

Die vorliegende Erfindung betrifft ein System und Verfahren zur sicheren Fahrzeugkommunikation.

Die zunehmende Datenerfassung, Datenverarbeitung und Datenkommunikation (bzw. Datenaustausch) zur Ausführung von Telematikanwendungen bzw. Telematikdiensten im Fahrzeug (im Folgenden auch Fahrzeugkommunikation genannt), die über Server als Bereitsteller von Telematikdiensten über das Internet bereitgestellt werden, birgt Herausforderungen in Hinblick auf die Informationssicherheit, insbesondere in Hinblick auf den Datenschutz von zumindest personenbezogenen und/oder personenbeziehbaren Daten, also Daten, die einen unmittelbaren und/oder mittelbaren Personenbezug ermöglichen. Auch wenn ein Personenbezug beim Datenaustausch bei der Ausführung von Telematikanwendungen nicht immer auf der Hand liegt, können für die gängigen und künftigen Fahrzeugkommunikationsszenarios konkrete Informationen über den Halter bzw. Fahrer des entsprechenden Fahrzeugs gewonnen werden. So können beispielsweise durch die Erfassung und Weiterleitung von Orts- und Bewegungsdaten Erkenntnisse über Aufenthaltsorte des Halters bzw. Fahrers des Fahrzeugs sowie sein Fahrverhalten geschlossen werden. Aus diesen Erkenntnissen können entsprechende Bewegungs- und/oder Verhaltensprofile erstellt werden. Dies ist besonders kritisch, wenn die Daten bzw. die daraus geschlossenen Profile Dritten zugänglich gemacht werden.

Druckschrift US 2016/0352712 A1 offenbart eine Fahrzeug-Head-Unit eines Fahrzeugs umfassend mindestens einen Prozessor und mindestens ein Modul, das ausgebildet ist, auf die Authentifizierung eines ersten Benutzers an einer Fahrzeug-Head-Unit eines Fahrzeugs zu reagieren, eine Sitzung mit einer ersten Benutzerkennung einzurichten, wobei die erste Benutzerkennung dem ersten Benutzer zugeordnet ist; in Reaktion auf die Authentifizierung eines zweiten Benutzers an der Fahrzeug-Head-Unit der Sitzung eine zweite Benutzerkennung zuzuordnen, wobei die zweite Benutzerkennung dem zweiten Benutzer zugeordnet ist, wobei die erste und die zweite Benutzerkennung gleichzeitig der Sitzung zugeordnet sind.

Druckschrift US 2004/117195 A1 offenbart einen Opportunity-Server, der drahtlose Web-Transaktionen in einem Fahrzeuginformationssystem mithilfe von Sitzungs-Identifikationen rückverfolgt. Dabei werden Transaktionsdatensätze zu Sitzungs-Daten aggregiert. Die Sitzungs-Daten werden verwendet, um Kosten der Netzwerk- und Systemverwendung in einem Online-Bieterverfahren einer Partei mit dem höchsten Gebot zugewiesen, um die Kosten Transaktionen zur Netzwerk- und Systemnutzung zuzuweisen. Dies dient der Verrechnung der Systemnutzung mit dem Nutzer. Gutschriften werden verrechnet, um Umsatz- und Produktionskosten des OEM-Equipments und der Netzwerkkosten zu teilen, wodurch sich die Kosten der Transaktionen durch einen Nutzer reduzieren.

Die Aufgabe der Erfindung besteht darin, die vorstehend genannten Nachteile zu vermeiden und eine Lösung zu schaffen, die eine sichere Fahrzeugkommunikation ermöglicht.

Diese Aufgabe wird erfindungsgemäß durch die Merkmale der unabhängigen Ansprüche gelöst. Bevorzugte Ausführungsformen sind Gegenstand der abhängigen Ansprüche.

Gemäß einem ersten Aspekt der Erfindung wird ein System zur sicheren Fahrzeugkommunikation eines Fahrzeugs, umfassend:
ein Kommunikationssystem umfassend:
   - zumindest ein Telematikmodul zum Ausführen von ein oder mehreren Telematikanwendungen,
   - ein Sessionmodul zum Management von jeweiligen Sessions für die eine oder mehreren Telematikanwendungen, wobei das Session-Management jeweils die Zuordnung zumindest einer Session-Identifikationsnummer, Session-ID, zu jeder Telematikanwendung umfasst;
dadurch gekennzeichnet, dass das Sessionmodul jeder Telematikanwendung nach Ablauf eines vorbestimmten festen Zeitraums oder eines dynamisch zufällig gewählten Zeitraums durch Änderung der Session-ID eine neue Session-ID zuzuordnen und damit die entsprechende bestehende Session zu beenden und entsprechend der neuen Session-ID eine neue Session zu beginnen;
wobei das Telematikmodul ausgebildet ist, nach Änderung der Session-ID die jeweilige Telematikanwendung in Zuordnung zu der geänderten Session-ID weiterhin zu erbringen.

Das Kommunikationssystem ist lokal im Fahrzeug angeordnet. Es umfasst zumindest ein Telematikmodul zum Ausführen von einer oder mehreren, dem Telematikmodul zugeordneten Telematikanwendungen.

Telematikanwendungen, die im Fahrzeug genutzt werden, umfassen die Bereiche Verkehrslenkung, Sicherheitsdienste und dynamische Navigationshilfen. Beispielsweise ist die zumindest eine Telematikanwendung
- eine dynamische Aktualisierung von Zustandsinformationen einer oder mehrerer im Fahrzeug befindlicher, digitaler Karten zur Bereitstellung von dynamischen Navigationshilfen, zum Durchführen von zumindest einem autonomen Fahrmodus des Fahrzeugs, etc.;
- ein Flottenmanagement;
- einen Ferndiagnose;
- ein Diebstahlschutz;
- ein Zugriff auf fahrzeugexterne Datenbanken und/oder
- ein Versenden elektronischer Nachrichten, z.B. elektronische Post.

Die Durchführung bzw. Bereitstellung von Telematikanwendungen im Fahrzeug erfordert die Kommunikation des im Fahrzeug angeordneten Kommunikationssystems umfassend zumindest ein Telematik-Modul mit einem Telematikdienst-Anbieter, beispielsweise einem Server, der zumindest einen Telematikdienst über ein geeignetes Netzwerk, beispielsweise das Internet, zur Verfügung stellt. Die Kommunikation zwischen dem Fahrzeug und dem Server kann beispielsweise über das Mobilfunknetz erfolgen und eine vorherige Authentifizierung mittels geeigneter, spezifischer Zugangsdaten umfassen.

Das zumindest eine Telematikmodul kann beispielsweise eine eigenständige Schaltungseinheit oder einen Teil einer zentralen Rechnereinheit umfassen. Zudem oder alternativ dazu kann das zumindest eine Telematikmodul ein Softwaremodul umfassen, das von einer geeigneten Rechnereinheit ausgeführt wird. Das zumindest eine Telematikmodul kann zumindest eine Netzwerkverbindungseinrichtung umfassen und/oder zumindest einer Netzwerkverbindungseinrichtung zugeordnet sein, so dass die zumindest eine Telematikanwendung, die dem Telematikmodul zugeordnet ist, über ein geeignetes Netzwerk den zumindest einen Telematikdienst des Telematikdienst-Anbieters zugreifen kann.

Eine Session bzw. Sitzung ist eine stehende Verbindung zwischen einem Client - in diesem Fall das Fahrzeug - und einem Server - in diesem Fall den Telematikdienst-Anbieter. Eine Session umfasst eine Zuordnung einer Session-ID zu einer Vielzahl zusammenhängender Vorgänge über sonst zustandslose Protokolle (z.B. HTTP) und kann beispielsweise implizit durch Beenden der Verwendung der Session-ID oder explizit durch ein Logout beendet werden. Bei der Session wird über die sonst zustandslosen Protokolle, über die keine stehenden Verbindungen zwischen dem Client und Server möglich sind, bei jedem Zugriff auf den Server eine Session-Identifikationsnummer bzw. Session-ID übertragen, so dass die sonst zusammenhangslosen Zugriffe des Clients zu einer zusammenhängenden Session zusammengefasst werden.

Das im Fahrzeug befindliche Kommunikationssystem umfasst ein zentrales Sessionmodul zum Session-Management der Telematikanwendungen, die auf dem zumindest einem Telematikmodul ausgeführt werden. Dass Session-Management umfasst dabei die Zuordnung zumindest einer Session-Identifikationsnummer (Session-ID) zu jeder Session einer Telematikanwendung, die auf dem zumindest einen Telematikmodul ausgeführt wird. Dabei kann zu jeder Telematikanwendung eine eigene Session-ID erzeugt werden. Das Sessionmodul kann beispielsweise eine eigenständige Schaltungseinheit oder einen Teil einer zentralen Rechnereinheit umfassen. Zudem oder alternativ dazu kann das zumindest eine Sessionmodul ein Softwaremodul umfassen, das von einer geeigneten Rechnereinheit ausgeführt wird. Das Sessionmodul kann die Session-ID an das entsprechende Telematikmodul übertragen. In einem anderen Beispiel kann das Sessionmodul eine Netzwerkverbindungseinrichtung umfassen und/oder zumindest einer Netzwerkverbindungseinrichtung zugeordnet sein, so dass das Telematikmodul das Session-Management der Telematikdienste über ein geeignetes Netzwerk durchführen kann.

Vorteilhafter Weise verhindert das Session-Management über das zentrale Session-Modul, das sich im Fahrzeug befindet, dass die Telematikdienst-Anbieter eine Korrelation zwischen der entsprechenden Session (über die Session-ID) und dem Fahrzeug feststellen kann. Somit ist es dem Telematikdienst-Anbieter nicht möglich, Bewegungs- und/oder Verhaltensprofile aus der zumindest einen Telematik-Anwendung zu erstellen. Dadurch wird die Datensicherheit des Fahrers bzw. Besitzers des Fahrzeugs signifikant erhöht. Unter den Begriff Datensicherheit ist im Rahmen dieser Beschreibung insbesondere der Schutz der Privatsphäre vom Fahrer bzw. Halter des Fahrzeugs zu verstehen. Insbesondere umfasst dieser Schutz der Privatsphäre zu verhindern, dass aus den technischen Zustandsdaten vom Fahrzeug bzw. weiterer technischer Daten, die für die Erbringung der ein oder mehreren Telematikanwendungen erforderlich sind, ein Personenbezug mittelbar und/oder unmittelbar möglich ist. Dadurch wird vorteilhafter Weise verhindert, dass diese technischen Daten einen Personenbezug haben bzw. eine Personenbeziehbarkeit umfassen, wodurch die Sicherheit der Fahrzeugkommunikation mit Bezug auf den unmittelbaren und mittelbaren Datenschutz erhöht bzw. eine sichere Fahrzeugkommunikation ermöglicht wird.

Beispielsweise kann während jeder Fahrt das Sessionmodul lesend auf das Speichermodul zugreifen und nach einem im Speichermodul hinterlegten, vordefinierbaren Session-Zeitraum (siehe oben) die Session-ID ändern. Dies kann beispielsweise erfolgen, indem das Sessionmodul nach diesem Session-Zeitraum eine neue Session-ID zur Erbringung der zumindest einen Telematikanwendung im Fahrzeug zuordnet. Durch die Änderung der Session-ID wird die Session implizit beendet, da kein Bezug mehr zu den vorherigen Aktionen besteht.

Vorteilhafter Weise wird so die Zuordenbarkeit von Daten zu einer bestimmten Session erschwert, da keine Zuordenbarkeit von Daten zu einer bestimmten Fahrt bzw. Fahrtdauer mehr möglich ist, wodurch die Datensicherheit weiter erhöht wird.

Darüber hinaus kann im Speichermodul (durch das Sessionmodul und/oder ab Werk) hinterlegt werden, dass vor jeder Änderung der Session-ID während der Fahrt für einen geeigneten vorbestimmten Zeitraum, der entweder fest definiert oder dynamisch zufällig gewählt sein kann, die Telematik-Anwendung unterbrochen werden kann. Das Sessionmodul kann diese Unterbrechung realisieren, nachdem es beispielsweise lesend das Speichermodul zugegriffen hat. Dadurch wird die Datensicherheit weiter erhöht, da kein unmittelbarer zeitlicher Zusammenhang zwischen der alten und der neuen Session-ID für die Telematik-Anwendung möglich ist und somit die Personenbeziehbarkeit weiter erschwert wird.

Vorzugsweise umfasst das System zudem ein Speichermodul, wobei das Sessionmodul eine Korrelation aller Session-IDs zum Fahrzeug lokal im Speichermodul hinterlegt.

Beispielsweise kann im Fahrzeug ein Speichermodul vorhanden sein, auf welches das Sessionmodul zumindest schreibend zugreifen und eine Korrelation jeder Session-ID zum Fahrzeug und gegebenenfalls einen vordefinierbaren bzw. vordefinierten Session-Zeitraum für die zumindest eine Telematikanwendung hinterlegen kann, wobei jeder Telematikanwendung ein eigener Session-Zeitraum hinterlegt sein kann. Beispielsweise kann als vordefinierter Session-Zeitraum hinterlegt sein, dass jede Session (einer Telematikanwendung) nach einem angemessenen Zeitraum, z.B. nach 1 Minute, nach 2 Minuten, nach 5 Minuten oder jedem anderen angemessenen Zeitraum, beendet wird. Bei dem vordefinierten Session-Zeitraum kann es sich auch jeweils um zufällig gewählte Zeiträume, die beispielsweise dynamisch durch einen Zufallsgenerator erzeugt werden, handeln. Alternativ dazu kann der/können die Session-Zeitraum/Session-Zeiträume ab Werk auf dem Speichermodul hinterlegt sein.

Vorteilhafter Weise bleiben die Daten lokal im Fahrzeug gespeichert, so dass der Fahrer bzw. Besitzer des Fahrzeugs auf Wunsch auf die Daten zugreifen und eine Analyse der Daten initiieren kann.

Vorzugsweise wird die Korrelation der Session-IDs zum Fahrzeug im Speichermodul periodisch überschrieben.

Beispielsweise kann vorgegeben sein, dass die Korrelation jeder Session-ID zum Fahrzeug für einen vorbestimmten Zeitraum im Speichermodul zu möglichen Datenauswertungen hinterlegt bleibt und nach Ablauf des vorbestimmten Zeitraums im Speichermodul überschrieben wird. Beispielsweise kann der vorbestimmte Zeitraum einen Tag, eine Woche, einen Monat, oder jeden anderen geeigneten Zeitraum umfassen. Vorteilhafter Weise wird so der Speicherbedarf für Hinterlegung der Korrelation der Session-IDs zum Fahrzeug im Speichermodul minimiert.

Vorzugsweise umfasst das System zudem ein Steuermodul, wobei das Steuermodul bei einem vorbestimmbaren Ereignis auf die Korrelation der Session-IDs zum Fahrzeug aus dem Speichermodul zugreift und an einen entsprechenden Telematik-Dienstanbieter und/oder einen vertrauenswürdigen Backend-Server übermittelt.

Beispielsweise kann das vorbestimmbare Ereignis ein Fehler sein, der während eines Telematik-Dienstes auftritt. In diesem Fall kann automatisch über ein im Fahrzeug befindliches Steuermodul die Korrelation der entsprechenden Session-ID(s) zum Fahrzeug aus dem Speichermodul ausgelesen und zur Fehlerdiagnose an den entsprechenden Telematik-Dienstanbieter und/oder an einen vertrauenswürdigen Backend-Server übermittelt werden. Dabei kann es vorgesehen sein, dass vor jedem Datenauslesen durch das Steuermodul und/oder vor jedem Übermitteln der Daten an einen Telematik-Dienstanbieter und/oder an den Backend-Server eine Zustimmung des Fahrers bzw. Besitzers des Fahrzeugs über die Ein- und Ausgabeeinheit des Fahrzeugs angefordert wird.

Vorzugsweise umfasst das vordefinierte Ereignis eine Aufforderung zur Übermittlung der Korrelation der Session-IDs zum Fahrzeug über eine Ein- und Ausgabeeinheit des Fahrzeugs.

Beispielsweise kann, falls ein Fehler während eines Telematik-Dienstes auftritt, dem Fahrer über einen Ein- und Ausgabeeinheit (z.B. Bordcomputer) im Fahrzeug eine Fehlermeldung erhalten. In einem anderen Beispiel kann der Fahrer des Fahrzeugs selbst eine fehlerhafte Ausführung eines Telematik-Dienstes erkennen. In diesem Fall kann der Fahrer durch eine geeignete Eingabe über die Ein- und Ausgabeeinheit die Übermittlung der Korrelation der entsprechenden Session-ID(s) zum Fahrzeug initiieren. Über die geeignete Eingabe kann das Steuermodul initiiert werden, die entsprechenden Session-ID(s) aus dem Speichermodul auszulesen und zur Fehlerdiagnose an den entsprechenden Telematik-Dienstanbieter und/oder an einen vertrauenswürdigen Backend-Server übermitteln.

Dem Fahrer bzw. Besitzer des Fahrzeugs kann zudem beispielsweise über die Ein- und Ausgabeeinheit des Fahrzeugs die Möglichkeit bereitgestellt werden, sämtliche Daten aus dem Datenmodul zu löschen.

Vorteilhafter Weise kann so sichergestellt werden, dass die im Speichermodul hinterlegten Daten zur Fehlerdiagnose auf Initiierung des Fahrers bzw. Besitzers des Fahrzeugs an den entsprechenden Telematikdienst-Anbieter und/oder einen vertrauenswürdigen Backend-Server übermittelt werden können. Somit ist die Diagnosefähigkeit durch die Daten trotz der erhöhten Datensicherheit sichergestellt.

Gemäß einem zweiten Aspekt der vorliegenden Erfindung wird die zugrunde liegende Aufgabe durch ein Verfahren zur sicheren Fahrzeugkommunikation eines Fahrzeugs gelöst, umfassend:
Ausführen von einer oder mehreren Telematikanwendungen über zumindest ein Telematikmodul; und
Durchführen eines Managements von jeweiligen Sessions für die eine oder mehreren Telematikanwendungen über ein im Fahrzeug befindliches Sessionmodul,
wobei dass Session-Management die Zuordnung jeweils zumindest einer Session Identifikationsnummer, Session-ID, zu jeder Telematikanwendung umfasst,
dadurch gekennzeichnet, dass das Sessionmodul jeder Telematikanwendung nach Ablauf eines vorbestimmten festen Zeitraums oder eines dynamisch zufällig gewählten Zeitraums durch Änderung der Session-ID eine neue Session-ID zuordnet und damit die entsprechende bestehende Session beendet und entsprechend der neuen Session-ID eine neue Session beginnt,
wobei das Telematikmodul ausgebildet ist, nach Änderung der Session-ID die jeweilige Telematikanwendung in Zuordnung zu der geänderten Session-ID weiterhin zu erbringen.

Vorzugsweise umfasst das Verfahren zudem:
Hinterlegen einer Korrelation aller Session-IDs zum Fahrzeug in einem lokalen Speichermodul,
wobei die Korrelation der Session-IDs zum Fahrzeug im Speichermodul periodisch überschrieben wird.

Vorzugsweise umfasst das Verfahren zudem:
Übermitteln der Korrelation der Session-IDs zum Fahrzeug bei einem vorbestimmbaren Ereignis an einen entsprechenden Telematik-Dienstanbieter und/oder einen vertrauenswürdigen Backend-Server;
wobei das vorbestimmbare Ereignis eine Aufforderung zur Übermittlung der Korrelation der Session-IDs zum Fahrzeug über eine Ein- und Ausgabeeinheit des Fahrzeugs umfasst.

Diese und andere Aufgaben, Merkmale und Vorteile der vorliegenden Erfindung werden aus dem Studium der folgenden detaillierten Beschreibung bevorzugter Ausführungsformen und der beiliegenden Figuren verdeutlicht. Es ist ersichtlich, dass - obwohl Ausführungsformen separat beschrieben werden - einzelne Merkmale daraus zu zusätzlichen Ausführungsformen kombiniert werden können.
- **Fig. 1**: zeigt ein beispielhaftes System zur sicheren Fahrzeugkommunikation eines Fahrzeugs;
- **Fig. 2**: zeigt ein beispielhaftes Verfahren zur sicheren Fahrzeugkommunikation.

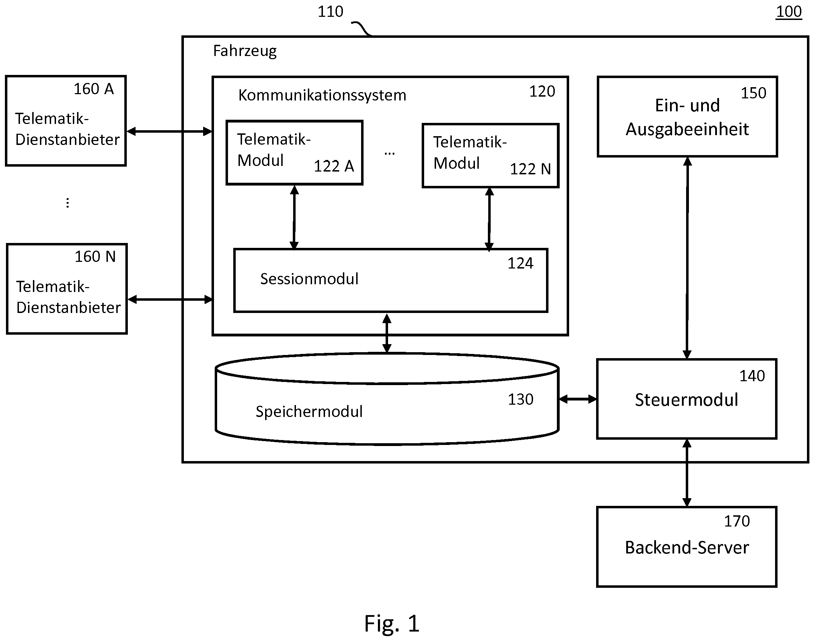

**Figur 1** zeigt ein beispielhaftes System 100 zur sicheren Fahrzeugkommunikation eines Fahrzeugs 110. Das Fahrzeug umfasst ein Kommunikationssystem 120. Das Kommunikationssystem 120 umfasst zumindest ein Telematikmodul 122A ... 122N zum Ausführen von ein oder mehreren dem Telematikmodul 122A ... 1225N zugeordneten Telematikanwendungen.

Telematikanwendungen, die im Fahrzeug genutzt werden, umfassen die Bereiche Verkehrslenkung, Sicherheitsdienste und dynamische Navigationshilfen. Beispielsweise ist die zumindest eine Telematikanwendung
- eine dynamische Aktualisierung von Zustandsinformationen einer oder mehrerer im Fahrzeug befindlicher, digitaler Karten zur Bereitstellung von dynamischen

Navigationshilfen, zum Durchführen von zumindest einem autonomen Fahrmodus des Fahrzeugs;
- ein Flottenmanagement;
- einen Ferndiagnose;
- ein Diebstahlschutz;
- ein Zugriff auf fahrzeugexterne Datenbanken und/oder
- ein Versenden elektronischer Nachrichten, z.B. elektronische Post.

Die Durchführung bzw. Bereitstellung von Telematikanwendungen im Fahrzeug 110 erfordert die Kommunikation des im Fahrzeug 110 angeordneten Kommunikationssystems 120 umfassend zumindest ein Telematik-Modul 122A ... 122N mit zumindest einem Telematikdienst-Anbieter 160A ... 160N, beispielsweise einem Server, der zumindest einen Telematikdienst über das Internet zur Verfügung stellt. Die Kommunikation zwischen dem Fahrzeug (Client) 110 und dem Server 160A ... 160N kann beispielsweise über ein Mobilfunknetz erfolgen und eine vorherige Authentifizierung mittels geeigneter, spezifischer Zugangsdaten umfassen.

Das zumindest eine Telematikmodul 122A ... 122N kann beispielsweise eine eigenständige Schaltungseinheit oder einen Teil einer zentralen Rechnereinheit umfassen. Zudem oder alternativ dazu kann das zumindest eine Telematikmodul ein Softwaremodul umfassen, das von einer geeigneten Rechnereinheit ausgeführt wird. Das zumindest eine Telematikmodul kann zumindest eine Netzwerkverbindungseinrichtung umfassen und/oder zumindest einer Netzwerkverbindungseinrichtung zugeordnet sein, so dass die zumindest eine Telematikanwendung, die dem Telematikmodul zugeordnet ist, über ein geeignetes Netzwerk auf den zumindest einen Telematikdienst des Telematikdienst-Anbieters zugreifen kann.

Das im Fahrzeug befindliche Kommunikationssystem 120 umfasst ein zentrales Sessionmodul 124 zum Session-Management der Telematikanwendungen, die auf dem zumindest einem Telematikmodul 122A ... 122N ausgeführt werden. Dass Session-Management umfasst dabei die Zuordnung zumindest einer Session-Identifikationsnummer (Session-ID) zu jeder Telematikanwendung, die auf dem zumindest einen Telematikmodul 122A ... 122N ausgeführt wird. Dabei kann zu jeder Telematikanwendung eine eigene Session-ID erzeugt und/oder zugeordnet werden. Das Sessionmodul 124 kann beispielsweise eine eigenständige Schaltungseinheit oder einen Teil einer zentralen Rechnereinheit umfassen. Zudem oder alternativ dazu kann das Sessionmodul 124 ein Softwaremodul umfassen, das von einer geeigneten Rechnereinheit ausgeführt wird. Das Sessionmodul 124 kann die Session-ID an das entsprechende Telematikmodul 122A ... 122N übertragen. In einem anderen Beispiel kann das Sessionmodul 124 eine Netzwerkverbindungseinrichtung umfassen und/oder zumindest einer Netzwerkverbindungseinrichtung zugeordnet sein, so dass das Telematikmodul 124 das Session-Management der Telematikdienste über ein geeignetes Netzwerk durchführen kann. Das Sessionmodul kann die Session-ID für eine Telematik-Anwendung 160A ... 160N während einer Session ändern. Beispielsweise kann während jeder Session nach einem jeweils zufällig gewählten Zeitraum die Session-ID geändert werden. Vorteilhafter Weise wird so die Zuordenbarkeit von möglicherweise personenbeziehbaren Daten zu einer bestimmten Session erschwert und somit die Datensicherheit weiter erhöht.

Durch das Session-Management über das zentrale Session-Modul 124, das sich im Fahrzeug 110 befindet, ist es den Telematikdienst-Anbietern 160A ... 160N nicht möglich, eine Korrelation zwischen der entsprechenden Session und dem Fahrzeug 110 herzustellen bzw. festzustellen. Dadurch ist es den Telematikdienst-Anbietern 160A ... 160N nicht möglich, Bewegungs- und/oder Verhaltensprofile aus der zumindest einen Telematik-Anwendung zu erstellen. Dadurch wird die Datensicherheit hinsichtlich Daten des Fahrers bzw. Besitzers des Fahrzeugs 110 signifikant erhöht.

Das System 100 kann zudem ein Speichermodul 130 umfassen, welches auch lokal im Fahrzeug 110 angeordnet ist. Das Sessionmodul 124 kann zumindest schreibend auf das Speichermodul 130 zugreifen und eine Korrelation aller Session-IDs zum Fahrzeug 110 lokal im Speichermodul 130 hinterlegen. Das Speichermodul kann Teil des Kommunikationssystems 120 sein bzw. zumindest logisch von dem Kommunikationssystem 120 getrennt sein.

Darüber hinaus kann im Speichermodul 130 ein vordefinierbarer bzw. vordefinierter Session-Zeitraum für jede Telematikanwendung (durch das Sessionmodul 124 und/oder ab Werk) hinterleget sein. In diesem Beispiel kann das Sessionmodul 124 auch lesend auf das Speichermodul 130 zugreifen. Beispielsweise kann als vordefinierter Session-Zeitraum hinterlegt sein, dass jede Session nach einem angemessenen Zeitraum, z.B. nach 1 Minute, nach 2 Minuten, nach 5 Minuten oder jedem anderen angemessenen Zeitraum, beendet wird. Bei dem vordefinierten Session-Zeitraum kann es sich auch jeweils um zufällig gewählte Zeiträume, die beispielsweise dynamisch durch einen Zufallsgenerator erzeugt werden, handeln. Dabei kann zu jeder Telematik-Anwendung auch ein eigener, vordefinierter Session-Zeitraum hinterlegt werden. Das Sessionmodul 124 kann die Session-ID für jede Telematik-Anwendung während einer Fahrt ändern. Beispielsweise kann während jeder Fahrt nach einem (oder mehreren) im Speichermodul 130 hinterlegten, vordefinierbaren Session-Zeitraum (Session-Zeiträumen) die Session-ID geändert werden. Dies kann beispielsweise erfolgen, indem das Sessionmodul 124 nach Auslesen des jeweiligen Session-Zeitraums aus dem Speichermodul 130 der jeweiligen Telematikanwendung eine neue Session-ID zur Erbringung der zumindest einen Telematikanwendung im Fahrzeug zuordnet. Durch die Änderung bzw. Neu-Zuordnung der Session-ID wird die Session implizit beendet, da kein Bezug mehr zu den vorherigen Aktionen besteht. Vorteilhafter Weise wird so die Zuordenbarkeit von Daten zu einer bestimmten Session und somit auch die Personenbeziehbarkeit der Daten erschwert, da keine Zuordenbarkeit von Daten zu einer bestimmten Fahrt bzw. Fahrtdauer mehr möglich ist, wodurch die Datensicherheit weiter erhöht wird.

Darüber hinaus kann im Speichermodul 130 (durch das Sessionmodul und/oder ab Werk) hinterlegt werden, dass das Sessionmodul 124 vor jeder Änderung der Session-ID der jeweiligen Telematikanwendung während der Fahrt für einen geeigneten vorbestimmten Zeitraum, der entweder fest definiert oder dynamisch zufällig gewählt sein kann, die jeweilige Telematikanwendung unterbrechen kann. Dadurch wird die Datensicherheit weiter erhöht, da kein unmittelbarer zeitlicher Zusammenhang zwischen der "alten" und der "neuen" Session-ID für die Telematikanwendung möglich ist und somit die Personenbeziehbarkeit der Daten weiter erschwert wird.

Vorteilhafter Weise bleiben so die Daten lokal im Fahrzeug 110 gespeichert, so dass der Fahrer bzw. Besitzer des Fahrzeugs 110 auf Wunsch Zugriff auf die im Speichermodul 130 hinterlegten Daten hat wobei gleichzeitig ein Zugriff auf diese Daten durch Dritte, insbesondere durch die Telematik-Dienstanbieter 160A ... 160N verhindert wird.

Die Korrelation der Session-IDs zum Fahrzeug 110 im Speichermodul 130 kann periodisch überschrieben werden. Beispielsweise kann vorgegeben sein, dass die Korrelation jeder Session-ID zum Fahrzeug 110 für einen vorbestimmten bzw. vorbestimmbaren Zeitraum im Speichermodul 130 zu möglichen Datenauswertungen hinterlegt bleibt und nach Ablauf des vorbestimmten Zeitraums im Speichermodul 130 überschrieben wird. Beispielsweise kann der vorbestimmte Zeitraum einen Tag, eine Woche, einen Monat, oder jeden anderen geeigneten Zeitraum umfassen. Vorteilhafter Weise wird so der Speicherbedarf für Hinterlegung der Korrelation der Session-IDs zum Fahrzeug 110 im Speichermodul 130 minimiert.

Darüber hinaus kann das System 100 und insbesondere das Fahrzeug 110 ein Steuermodul 140 umfassen. Das Steuermodul 140 kann beispielsweise eine eigenständige Schaltungseinheit oder einen Teil einer zentralen Rechnereinheit umfassen. Zudem oder alternativ dazu kann das Steuermodul 140 ein Softwaremodul umfassen, das von einer geeigneten Rechnereinheit ausgeführt wird. Das Steuermodul 140 kann eingerichtet sein, bei einem vorbestimmbaren bzw. vorbestimmten Ereignis auf die Korrelationen der Session-IDs zum Fahrzeug 110, die im Speichermodul 130 hinterlegt sind, zuzugreifen und an den entsprechenden Telematik-Dienstanbieter 160A.... 160N zu übermitteln. Beispielsweise kann das vorbestimmte Ereignis ein Fehler sein, der während der Erbringung eines Telematik-Dienstes auftritt. In diesem Fall kann automatisch über das im Fahrzeug 110 befindliche Steuermodul 140 die Korrelation der entsprechenden Session-ID(s) zum Fahrzeug 110 aus dem Speichermodul 130 ausgelesen und zur Fehlerdiagnose an den entsprechenden Telematik-Dienstanbieter 160A ... 160N und/oder an einen vertrauenswürdigen Backend-Server 170 übermittelt werden. Dabei kann es vorgesehen sein, dass vor jedem Datenauslesen durch das Steuermodul 140 und/oder vor jedem Übermitteln der Daten an einen Telematik-Dienstanbieter 160A ... 160N und/oder an den Backend-Server 170 eine Zustimmung des Fahrers bzw. Besitzers des Fahrzeugs 110 über die Ein- und Ausgabeeinheit 150 des Fahrzeugs 110 angefordert wird.

Das vordefinierte bzw. vordefinierbare Ereignis kann eine Aufforderung zur Übermittlung der Korrelation der Session-IDs zum Fahrzeug 110 über eine Ein- und Ausgabeeinheit 150 des Fahrzeugs 110 umfassen.

Beispielsweise kann, falls ein Fehler während eines Telematik-Dienstes auftritt, dem Fahrer über einen Ein- und Ausgabeeinheit (z.B. Bordcomputer) 150 im Fahrzeug 110 eine Fehlermeldung ausgegeben werden. In einem anderen Beispiel kann der Fahrer des Fahrzeugs 110 selbst eine fehlerhafte Ausführung eines Telematik-Dienstes erkennen.

Der Fahrer bzw. Besitzer des Fahrzeugs 110 kann durch eine geeignete Eingabe über die Ein- und Ausgabeeinheit 150 die Übermittlung der Korrelation der Session-ID(s) zum Fahrzeug, die der entsprechenden Session des Telematik-Dienstes zugeordnet sind, initiieren. Die Ein- und Ausgabeeinheit 150 kann das Steuermodul 140 initiieren, die entsprechenden Session-ID(s) aus dem Speichermodul 130 auszulesen und zur Fehlerdiagnose an den entsprechenden Telematik-Dienstanbieter 160A ... 160N und/oder an einen vertrauenswürdigen Backend-Server 170 übermitteln.

Dem Fahrer bzw. Besitzer des Fahrzeugs 110 kann zudem beispielsweise über die Ein- und Ausgabeeinheit 150 des Fahrzeugs 110 die Möglichkeit bereitgestellt werden, sämtliche Daten aus dem Datenmodul 130 zu löschen.

Vorteilhafter Weise kann so sichergestellt werden, dass die im Speichermodul 130 hinterlegten Daten zur Fehlerdiagnose auf Initiierung des Fahrers bzw. Besitzers des Fahrzeugs 110 an den entsprechenden Telematikdienst-Anbieter 160A ... 160N und/oder einen vertrauenswürdigen Backend-Server 170 übermittelt werden können. Somit ist die Diagnosefähigkeit durch den Erhalt der Korrelation im Speichermodul 130 trotz der erhöhten Datensicherheit sichergestellt.

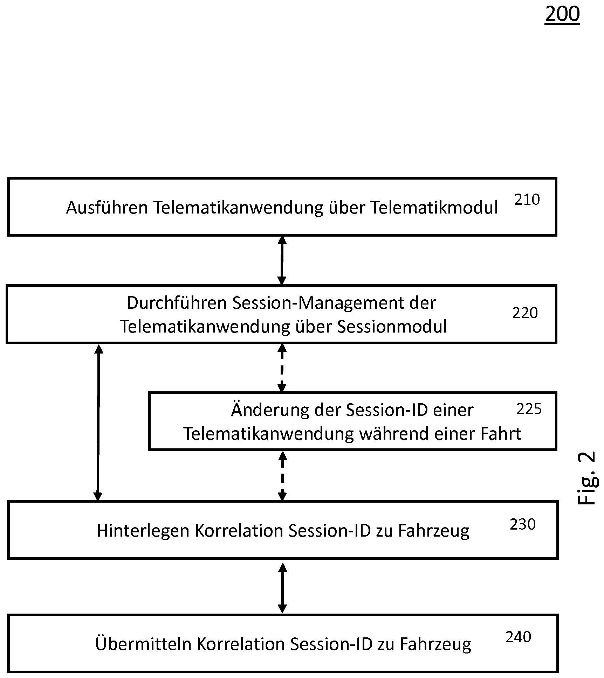

**Figur 2** zeigt ein beispielhaftes Verfahren 200 zur sicheren Fahrzeugkommunikation eines Fahrzeugs 110, das durch ein System 100 wie mit Bezug auf **Figur 1** beschrieben ausgeführt werden kann.

Das Verfahren 200 umfasst:
Ausführen 210 von einer oder mehreren Telematikanwendungen über zumindest ein Telematikmodul 122A ... 122N; und
Durchführen 220 eines Managements von jeweiligen Sessions für die eine oder mehreren Telematikanwendungen über ein im Fahrzeug befindliches Sessionmodul 124, wobei dass Session-Management jeweils die Zuordnung zumindest einer Session Identifikationsnummer, Session-ID, zu jeder Telematikanwendung umfasst;
wobei das Sessionmodul 124 jeder Telematikanwendung nach Ablauf eines vorbestimmten festen Zeitraums oder eines dynamisch zufällig gewählten Zeitraums durch Änderung der Session-ID eine neue Session-ID zuordnet und damit die entsprechende bestehende Session beendet und entsprechend der neuen Session-ID eine neue Session beginnt;
wobei das Telematikmodul 122A ... 122N ausgebildet ist, nach Änderung der Session-ID die jeweilige Telematikanwendung in Zuordnung zu der geänderten Session-ID weiterhin zu erbringen.

Dabei kann eine Änderung 225 der Session-ID für eine Telematik-Anwendung während einer Fahrt erfolgen.

Das Verfahren 200 kann zudem umfassen:
Hinterlegen 230 einer Korrelation aller Session-IDs zum Fahrzeug 110 in einem lokalen Speichermodul 130, wobei die Korrelation der Session-IDs zum Fahrzeug 110 im Speichermodul 130 periodisch überschrieben werden kann; und
Übermitteln 240 der Korrelation der Session-IDs zum Fahrzeug 110 bei einem vorbestimmbaren Ereignis an den entsprechenden Telematik-Dienstanbieter 160A ... 160N und/oder einen vertrauenswürdigen Backend-Server 170;
wobei das vorbestimmbare Ereignis eine Aufforderung zur Übermittlung der Korrelation der Session-IDs zum Fahrzeug 110 über eine Ein- und Ausgabeeinheit 150 des Fahrzeugs 110 umfasst.

## Patentansprüche

1. System (100) zur sicheren Fahrzeugkommunikation eines Fahrzeugs (110), umfassend:
ein Kommunikationssystem (120) umfassend:
- zumindest ein Telematikmodul (122A, ..., 122N) zum Ausführen von ein oder mehreren Telematikanwendungen,
- ein Sessionmodul (124) zum Management von jeweiligen Sessions für die eine oder mehreren Telematikanwendungen, wobei das Session-Management jeweils die Zuordnung zumindest einer Session-Identifikationsnummer, Session-ID, zu jeder Telematikanwendung umfasst;
**dadurch gekennzeichnet, dass**
das Sessionmodul (124) ausgebildet ist, jeder Telematikanwendung nach Ablauf eines vorbestimmten festen Zeitraums oder eines dynamisch zufällig gewählten Zeitraums durch Änderung der Session-ID eine neue Session-ID zuzuordnen und damit die entsprechende bestehende Session zu beenden und entsprechend der neuen Session-ID eine neue Session zu beginnen;
wobei das Telematikmodul (122A, ..., 122N) ausgebildet ist, nach Änderung der Session-ID die jeweilige Telematikanwendung in Zuordnung zu der geänderten Session-ID weiterhin zu erbringen.

2. System (100) nach Anspruch 1, zudem umfassend:
ein Speichermodul (130);
wobei das Sessionmodul (124) ausgebildet ist, eine Korrelation aller Session-IDs zum Fahrzeug (110) lokal im Speichermodul (130) zu hinterlegen.

3. System (100) nach Anspruch 2, wobei das Sessionmodul (124) ausgebildet ist, die Korrelation der Session-IDs zum Fahrzeug (110) im Speichermodul (130) periodisch zu überschreiben.

4. System (100) nach Anspruch 2 oder Anspruch 3, zudem umfassend:
ein Steuermodul (140), wobei das Steuermodul (140) ausgebildet ist, bei einem vorbestimmbaren Ereignis die Korrelation der Session-IDs zum Fahrzeug (110) aus dem Speichermodul (130) auszulesen und an einen entsprechenden Telematik-Dienstanbieter (160A, ..., 160N) und/oder einen vertrauenswürdigen Backend-Server (170) zu übermitteln.

5. System (100) gemäß Anspruch 4, wobei das vordefinierbare Ereignis eine Aufforderung zur Übermittlung der Korrelation der Session-IDs zum Fahrzeug (110) über eine Ein- und Ausgabeeinheit (150) des Fahrzeugs (110) umfasst.

6. Verfahren (200) zur sicheren Fahrzeugkommunikation eines Fahrzeugs (110), umfassend:
Ausführen (210) von einer oder mehreren Telematikanwendungen über zumindest ein Telematikmodul (122A, ..., 122N); und
Durchführen (220) eines Managements von jeweiligen Sessions für die eine oder mehreren Telematikanwendungen über ein im Fahrzeug (110) befindliches Sessionmodul (124), wobei dass Session-Management die Zuordnung jeweils zumindest einer Session Identifikationsnummer, Session-ID, zu jeder Telematikanwendung umfasst,
**dadurch gekennzeichnet, dass**
das Sessionmodul (124) jeder Telematikanwendung nach Ablauf eines vorbestimmten festen Zeitraums oder eines dynamisch zufällig gewählten Zeitraums durch Änderung der Session-ID eine neue Session-ID zuordnet und damit die entsprechende bestehende Session beendet und entsprechend der neuen Session-ID eine neue Session beginnt;
wobei das Telematikmodul (122A, ..., 122N) ausgebildet ist, nach Änderung der Session-ID die jeweilige Telematikanwendung in Zuordnung zu der geänderten Session-ID weiterhin zu erbringen.

7. Verfahren (200) gemäß Anspruch 6, zudem umfassend:
Hinterlegen (230) einer Korrelation aller Session-IDs zum Fahrzeug (110) in einem lokalen Speichermodul (130),
wobei die Korrelation der Session-IDs zum Fahrzeug (110) im Speichermodul (130) periodisch überschrieben wird.

8. Verfahren (200) gemäß Anspruch 7, zudem umfassend:
Übermitteln (240) der Korrelation der Session-IDs zum Fahrzeug bei einem vorbestimmbaren Ereignis an einen entsprechenden Telematik-Dienstanbieter (160A... 160N) und/oder einen vertrauenswürdigen Backend-Server (170);
wobei das vorbestimmbare Ereignis eine Aufforderung zur Übermittlung der Korrelation der Session-IDs zum Fahrzeug (110) über eine Ein- und Ausgabeeinheit (150) des Fahrzeugs (110) umfasst.

## Claims

1. System (100) for the secure vehicle communication of a vehicle (110), comprising:
a communication system (120) comprising:
- at least one telematics module (122A, ..., 122N) for executing one or more telematics applications,
- a session module (124) for managing respective sessions for the one or more telematics applications, wherein the session management respectively comprises the assignment of at least one session identification number, session ID, to each telematics application;
**characterized in that**
the session module (124) is designed to assign a new session ID to each telematics application after expiry of a predetermined fixed period or a dynamically randomly selected period by changing the session ID and therefore to end the corresponding existing session and to begin a new session according to the new session ID;
wherein the telematics module (122A, ..., 122N) is designed, after the session ID has been changed, to still assign the respective telematics application to the changed session ID.

2. System (100) according to Claim 1, also comprising:
a storage module (130);
wherein the session module (124) is designed to store a correlation of all session IDs to the vehicle (110) locally in the storage module (130).

3. System (100) according to Claim 2, wherein the session module (124) is designed to periodically overwrite the correlation of the session IDs to the vehicle (110) in the storage module (130).

4. System (100) according to Claim 2 or Claim 3, also comprising:
a control module (140), wherein the control module (140) is designed to read the correlation of the session IDs to the vehicle (110) from the storage module (130) in the case of a predeterminable event and to transmit said correlation to a corresponding telematics service provider (160A, ..., 160N) and/or a trusted backend server (170).

5. System (100) according to Claim 4, wherein the predefinable event comprises a request to transmit the correlation of the session IDs to the vehicle (110) via an input and output unit (150) of the vehicle (110).

6. Method (200) for the secure vehicle communication of a vehicle (110), comprising:
executing (210) one or more telematics applications via at least one telematics module (122A, ..., 122N); and
managing (220) respective sessions for the one or more telematics applications via a session module (124) in the vehicle (110), wherein the session management respectively comprises the assignment of at least one session identification number, session ID, to each telematics application,
**characterized in that**
the session module (124) assigns a new session ID to each telematics application after expiry of a predetermined fixed period or a dynamically randomly selected period by changing the session ID and therefore ends the corresponding existing session and begins a new session according to the new session ID;
wherein the telematics module (122A, ..., 122N) is designed, after the session ID has been changed, to still assign the respective telematics application to the changed session ID.

7. Method (200) according to Claim 6, also comprising:
storing (230) a correlation of all session IDs to the vehicle (110) in a local storage module (130),
wherein the correlation of the session IDs to the vehicle (110) in the storage module (130) is periodically overwritten.

8. Method (200) according to Claim 7, also comprising:
transmitting (240) the correlation of the session IDs to the vehicle to a corresponding telematics service provider (160A...160N) and/or a trusted backend server (170) in the case of a predeterminable event;
wherein the predeterminable event comprises a request to transmit the correlation of the session IDs to the vehicle (110) via an input and output unit (150) of the vehicle (110).

## Revendications

1. Système (100) destiné à la communication de véhicule sécurisée d'un véhicule (110), le système comprenant :
un système de communication (120) comprenant :
- au moins un module télématique (122A, ..., 122N) destiné à exécuter une ou plusieurs applications télématiques,
- un module de session (124) destiné à gérer des sessions respectives pour la ou les applications télématiques, la gestion de session comprenant l'association d'au moins un numéro d'identification de session, identifiant de session, à chaque application télématique ;
**caractérisé en ce que**
le module de session (124) est conçu pour associer un nouvel identifiant de session à chaque application télématique après expiration d'un intervalle de temps fixe prédéterminé ou d'un intervalle de temps sélectionné dynamiquement de manière aléatoire par changement d'identifiant de session et ainsi pour mettre fin à la session existante correspondante et commencer une nouvelle session conformément au nouvel identifiant de session ;
le module télématique (122A, ..., 122N) étant conçu pour fournir en outre, après que l'identifiant de session a été changé, l'application télématique respective en association avec l'identifiant de session changé.

2. Système (100) selon la revendication 1, comprenant en outre :
un module de mémoire (130) ;
le module de session (124) étant conçu pour mémoriser une corrélation de tous les identifiants de session relativement au véhicule (110) localement dans le module de mémoire (130).

3. Système (100) selon la revendication 2, le module de session (124) étant conçu pour écraser périodiquement la corrélation des identifiants de session relativement au véhicule (110) dans le module de mémoire (130).

4. Système (100) selon la revendication 2 ou la revendication 3, comprenant en outre :
un module de commande (140), le module de commande (140) étant conçu pour lire dans le module de mémoire (130) la corrélation des identifiants de session relativement au véhicule (110) et pour la transmettre à un prestataire de services télématiques correspondant (160A, 160N) et/ou à un serveur dorsal de confiance (170) .

5. Système (100) selon la revendication 4, l'événement pré-définissable comprenant une requête pour transmettre la corrélation des identifiants de session relativement au véhicule (110) par le biais d'une unité d'entrée et de sortie (150) du véhicule (110).

6. Procédé (200) de communication de véhicule sécurisée d'un véhicule (110), le procédé comprenant les étapes suivantes :
exécuter (210) une ou plusieurs applications télématiques par le biais d'au moins un module télématique (122A, ..., 122N) ; et
effectuer (220) une gestion de sessions respectives pour la ou les applications télématiques par le biais d'un module de session (124) situé dans le véhicule (110), la gestion de sessions comprenant l'association d'au moins un numéro d'identification de session, identifiant de session, à chaque application télématique,
**caractérisé en ce que**
le module de session (124) associe un nouvel identifiant de session à chaque application télématique après expiration d'un intervalle de temps fixe prédéterminé ou d'un intervalle de temps sélectionné dynamiquement de manière aléatoire par changement d'identifiant de session et met ainsi fin à la session existante correspondante et commence une nouvelle session conformément au nouvel identifiant de session ;
le module télématique (122A, ..., 122N) étant conçu pour fournir en outre, après que l'identifiant de session a été changé, l'application télématique respective en association avec l'identifiant de session changé.

7. Procédé (200) selon la revendication 6, comprenant en outre l'étape suivante :
mémoriser (230) une corrélation de tous les identifiants de session relativement au véhicule (110) dans un module de mémoire locale (130),
la corrélation des identifiants de session relativement au véhicule (110) étant périodiquement écrasée dans le module de mémoire (130).

8. Procédé (200) selon la revendication 7, comprenant en outre l'étape suivante :
transmettre (240) la corrélation des identifiants de session relativement au véhicule, lors d'un événement prédéterminable, à un prestataire de services télématiques correspondant (160A, ..., 160N) et/ou à un serveur dorsal de confiance (170) ;
l'événement prédéterminable comprenant une requête de transmission de la corrélation des identifiants de session relativement au véhicule (110) par le biais d'une unité d'entrée et de sortie (150) du véhicule (110).
